# EUROPÄISCHE PATENTSCHRIFT

(11) **EP 2 687 100 B1**
(45) Veröffentlichungstag und Bekanntmachung des Hinweises auf die Patenterteilung: **05.08.2015**
(21) Anmeldenummer: 13166405.4
(22) Anmeldetag: 03.05.2013
(51) Int. Cl.: A22C 11/12

(54) **Clipmaschine**
Clipping machine
Machine de fermeture par clip

(30) Priorität: 28.06.2012 DE 202012006260 U
(43) Veröffentlichungstag der Anmeldung: 22.01.2014
(73) Patentinhaber: Tipper Tie technopack GmbH, 21509 Glinde (DE)
(72) Erfinder: Jens, Thomas, 22952 Lütjensee (DE)
(74) Vertreter: Glawe, Delfs, Moll

(56) Entgegenhaltungen:
- WO-A2-2011/137987
- US-A1- 2003 073 397
- US-A1- 2006 075 722

## Beschreibung

Die Erfindung betrifft eine Clipmaschine nach dem Oberbegriff von Anspruch 1. Solche Maschinen kommen vornehmlich bei der Wurstherstellung zum Einsatz. Die schlauchförmige Verpackung wird dann durch einen mit Brät gefüllten Wurstdarm gebildet. Die Verpackung kann bereits einseitig verschlossen sein, so dass sie beutelförmig ist. Der Wurstdarm wird abschnittsweise radial gerafft, so dass sich ein Zopf kleinen Durchmessers ergibt. Auf die gerafften Darmabschnitte werden bei einem Doppelclipautomaten wie der erfindungsgemäßen Maschine zwei axial beabstandete Clips gesetzt. Die Clips werden um den Darm herum gebogen, so dass sich Clipverschlüsse bilden. Einer davon verschließt das Ende der vorlaufenden Wurst und der andere den Anfang der nachlaufenden. Normalerweise wird der Darm dann mit einem Messer zwischen den Clipverschlüssen getrennt, so dass die vorlaufende Wurst vom Darm abgetrennt wird.

Normalerweise ist der Darm fest genug gespannt, so dass er von einem frei liegenden Messer durchschnitten werden kann. Eine Gegenkante o. dgl. ist nicht erforderlich (US 2003/0073397 A1). Zuweilen sind Verpackungen aber recht elastisch oder deshalb schwer zu schneiden, weil sie zusätzlich ein Netz aufweisen. Für diese Fälle ist bekannt, linear bewegte Messer an Scherplatten entlang zu führen, so dass eine Abscherung stattfindet (US 2006/075722 A1). Der dafür erforderliche Hub zieht allerdings einen erheblichen Platzbedarf nach sich, weshalb diese Ausführung nur bei bestimmten Maschinentypen zum Einsatz kommt. Insbesondere für Clipmaschinen mit zwei schwenkbaren Verschließarmen ist sie wenig geeignet. Denn damit das Messer in die Verschlusszone kommen kann, muss es samt Linearantrieb und Führungsmitteln mitverschwenkt werden, was sehr viel Platz beansprucht.

Der Erfindung liegt die Aufgabe zu Grunde, für eine Clipmaschine mit schwenkbaren Verschließarmen einen effektiven und zugleich Platz sparenden Schneidmechanismus zu schaffen. Sie löst diese Aufgabe durch die Merkmale des Anspruchs 1. Die Unteransprüche enthalten vorteilhafte Weiterbildungen der Erfindung.

Die Erfindung beruht zum einen auf der Erkenntnis, dass sich der Messerantrieb dann besonders Platz sparend an einem der Verschließarme anordnen lässt, wenn er für eine Schwenkbewegung des Messers ausgelegt ist. Betrachtet in Richtung der Schlauchachse der Verpackung lassen sich Motor, Antriebsstrang und Messer im Wesentlichen entlang des Arms anordnen und werden mit diesem verschwenkt, so dass sich ein insgesamt geringer Platzbedarf ergibt. Allerdings ist bei einer Schwenkbewegung die vom Messer auf die Verpackung ausgeübte Kraft nicht konstant. Die Verpackung kann die Schneidkante entlang gleiten. Um dennoch ein sicheres Durchtrennen zu gewährleisten, ist eine spezielle, in Anspruch 1 wiedergegebene Ausführung des Gegenmessers und der Relativbewegung der Messer zueinander erforderlich.

Erfindungsgemäße Raffeinrichtungen können mit und ohne Führungseinrichtungen für Clips ausgerüstet sein. Sie können als Spreizverdränger ausgebildet sein, etwa indem eine Raffeinrichtung oder beide nach dem Raffen axial voneinander weg bewegt werden können, um einen füllgutfreien Verpackungszopf zu bilden.

Verschließarme sind Arme, die den Biegevorgang beim Bilden des Clipverschlusses bewirken. Hierzu können sie Verschließwerkzeuge, also Stempel oder Matrize, tragen oder eine Führungsaufgabe während des Biegevorgangs übernehmen.

Eine Schwenkbewegung im Sinne der Erfindung ist eine Bewegung um eine Schwenkachse, die ihrerseits bewegt sein kann. Vorzugsweise sind aber die Schwenkachsen für die Schwenkbewegungen der Verschließarme unbeweglich gegenüber der Clipmaschine. Außerdem ist es vorteilhaft, wenn die Schwenkachse für die Schwenkbewegung des Schneidmessers unbeweglich gegenüber dem die Schneideinrichtung tragenden Verschließarm ist. Die Schwenkachsen der Verschließarme können zusammen fallen oder auch auseinander fallen. Im letzteren Fall sind sie aber dennoch bevorzugt parallel orientiert.

Ein spitzer Keilwinkel ist ein Winkel von weniger als 90°.

Vorteilhafterweise umfasst der Messerantrieb einen Hebel, bei dem das Schneidmesser am Lastarm angeordnet ist und ein Motor auf den Kraftarm einwirkt. Mit einem solchen Hebel lässt sich die angestrebte Platz sparende Anordnung besonders gut erreichen.

Bevorzugt umfasst der Messerantrieb einen Linearmotor. Dies vereinfacht die Konstruktion. In diesem Fall ist es weiter vorteilhaft, wenn der Linearmotor ein Pneumatikzylinder mit eintauchendem Kolben ist. Dieser Antrieb ist besonders wartungsarm. Über die Wahl des Kolbendurchmessers lässt sich eine hinreichende Antriebskraft einstellen und insbesondere auf den Hebel abstimmen.

Vorteilhafterweise ist die Gegenklinge starr mit dem Verschließarm verbunden, was die Bauweise vereinfacht und zuverlässig macht.

Weiter ist es vorteilhaft, wenn die Schneidebene senkrecht zur Schlauchachse liegt. Der Platzbedarf ist dann besonders gering.

Bevorzugt verläuft die Schneidkante zumindest eines der Messer entlang einer Geraden, weiter bevorzugt auch die Schneidkanten des anderen Messers. Auch das vereinfacht die Konstruktion.

Vorteilhafterweise übersteigt der Winkel zwischen den Tangenten der beiden Schneidkanten im Schnittpunkt während seines Verlaufs vom Anfangsschneidpunkt zum Endschneidpunkt nicht 45°, vorzugweise nicht 30°, weiter vorzugsweise nicht 20° und noch weiter vorzugsweise nicht 10°. Hierdurch wird die Gefahr verringert, dass die Verpackung während des Schneidens entlang der Schneidkanten rutscht.

Bevorzugt ist der Keilwinkel bei zumindest einem der Messer, bevorzugt bei beiden Messern, entlang der Schneidkante konstant. Damit wird eine gleichmäßige Schneidwirkung erreicht.

Vorteilhafterweise ist der Keilwinkel nicht größer als 30°, vorzugsweise nicht größer als 20°, weiter vorzugsweise nicht größer als 10° und noch weiter vorzugsweise nicht größer als 5°. Diese kleinen Winkel haben sich als besonders geeignet für Verpackungsmaterial, insbesondere Wurstdärme und zugehörige Netze, erwiesen.

Nachfolgend wird ein Ausführungsbeispiel der Erfindung anhand von Zeichnungen näher erläutert. Dabei zeigen:
- Fig. 1: eine perspektivische Ansicht eines Teils einer erfindungsgemäßen Clipmaschine;
- Fig. 2: denselben Teil beim Verschließen einer schlauchförmigen Verpackung;
- Fig. 3: eine Stückdarstellung desselben Teils;
- Fig. 4: einen vergrößerten Ausschnitt aus Fig. 3;
- Fig. 5: schematische Profilansichten erfindungsgemäßer Messer.

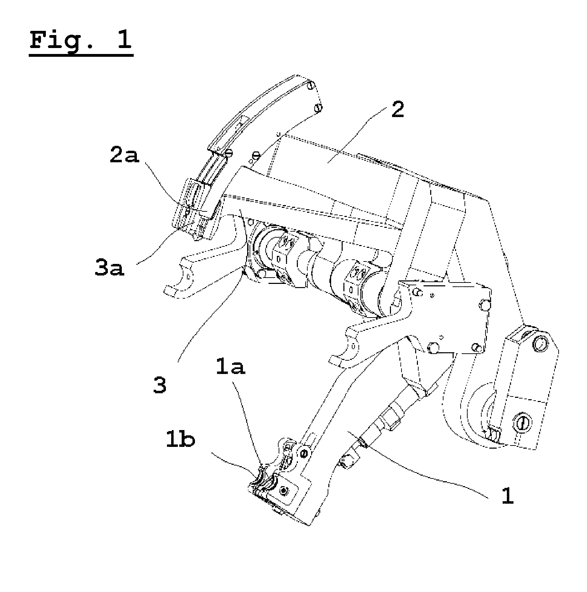

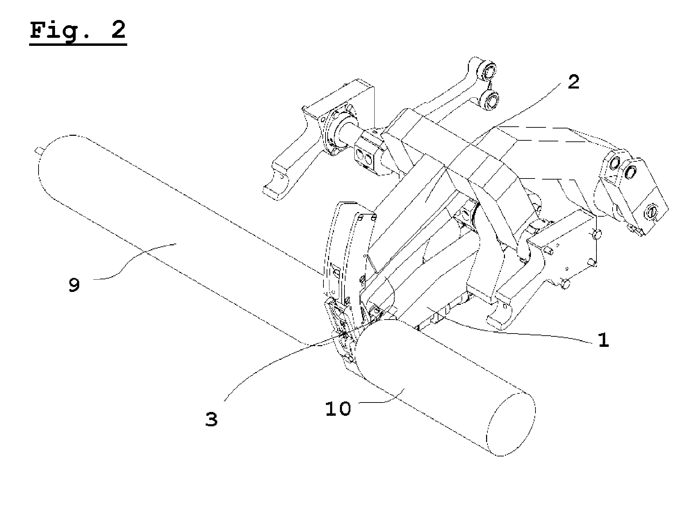

In Fig. 1 sieht man drei Verschließarme 1, 2 und 3. Der untere Verschließarm 1 trägt an seinem Ende zwei Matrizen 1a und 1b. Der obere Verschließarm 2 trägt an seinem Ende zwei Stempel, von denen einer 2a zu sehen ist. Unterhalb des oberen Verschließarms 2 befindet sich ein dritter Verschließarm 3, der an seinem Ende eine Halterung 3a für Clips trägt, um die Clips vom Ende (nicht dargestellter) Magaziniervorrichtungen zu den Verschließstellen oberhalb der eingeschwenkten Matrizen 1a und 1b zu transportieren und während des Beginns des Biegevorgangs zu halten. Raffeinrichtungen befinden sich axial neben den Verschließarmen 1, 2 und 3 und sind aus Übersichtlichkeitsgründen nicht dargestellt. In Fig. 2 sieht man die eingeschwenkten Verschließarme 1, 2 und 3 sowie schlauchförmige, bereits zusammen geraffte Verpackungen 9 und 10. Die eine schlauchförmige Verpackung 9 ist an ihrem vorderen Ende bereits verschlossen. Das hintere Ende wird zusammen mit dem vorlaufenden Ende der weiteren Verpackung 10 gerade verschlossen, indem um jedes dieser beiden Enden ein (nicht zu sehender) Clip gebogen wird. Zwischen den beiden Verschließstellen sind die Verpackungen 9, 10 voneinander zu trennen.

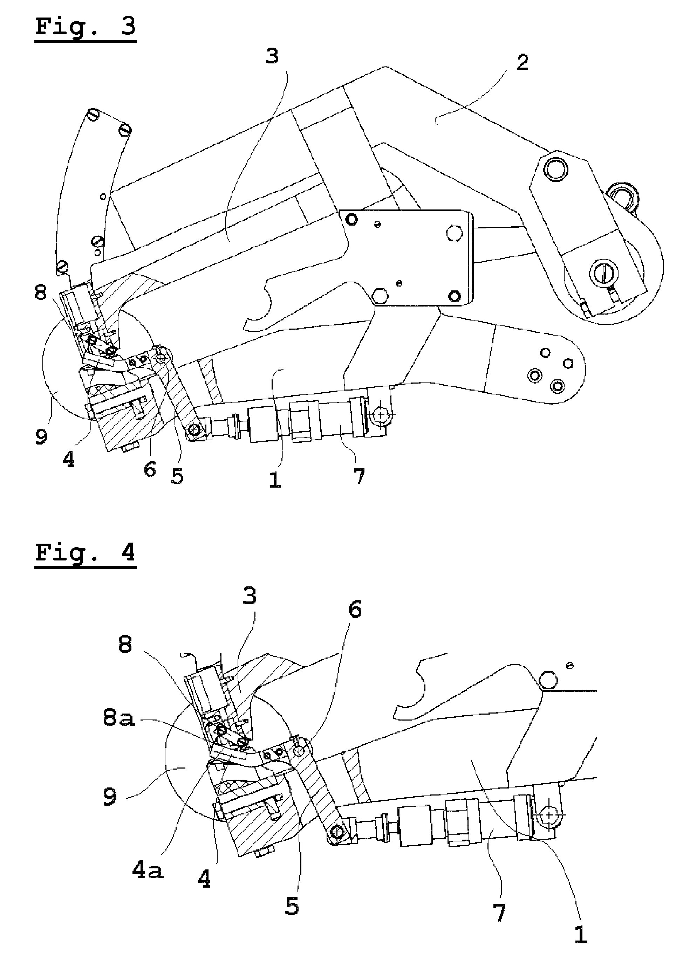

In Fig. 3 und 4 ist zu erkennen, dass am unteren Verschließarm 1 ein Messer 4 angeordnet ist. Dieses ist am Lastarm eines Hebels 5, welcher an einem unteren Verschließarm 1 angeordneten Drehpunkt 6 befestigt ist, angeordnet und damit verschwenkbar. An den Kraftarm des Hebels 5 greift ein Linearmotor in Form eines Pneumatikzylinders 7 mit eintauchendem Kolben an, welcher ebenfalls am Verschließarm 1 angeordnet ist. Damit ist der gesamte Messerantrieb am Verschließarm 1 angeordnet. Dies hat den besonderen Vorteil, dass die Schwenkbewegung des Verschließarms 1 gleichzeitig für die Zustellung des Messers 4 ausgenutzt wird. Dies ermöglicht eine kompaktere Bauweise.

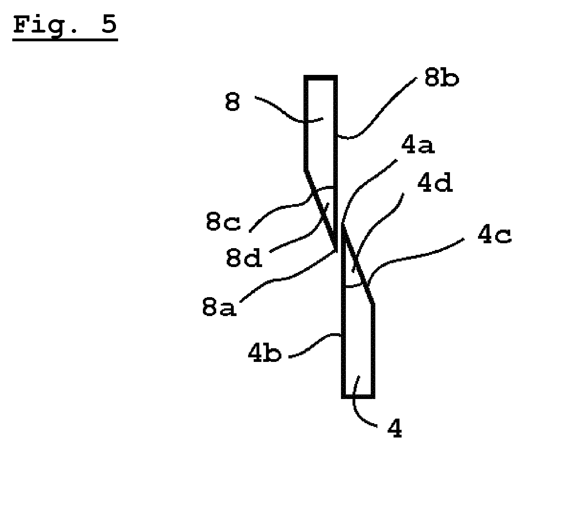

Mit dem Verschließarm 3 ist in Gegenmesser 8 starr verbunden. Beide Messer 4, 8 sind so angeordnet, dass ihre geraden Schneidkanten 4a, 8a in einer Ebene senkrecht zur Achse der schlauchförmigen Verpackung 9 liegen. Die Schneidebene liegt damit senkrecht zur Schlauchachse. Man sieht auch, dass der Winkel zwischen den Tangenten der beiden Schneidkanten 4a, 8a während des gesamten Schneidvorgangs nicht mehr als 20° beträgt. In Fig. 5 sieht man die parallel liegenden Schneidflächen 4b, 8b sowie die Keilflächen 4c, 8c. Die Keilwinkel 4d, 8d sind jeweils konstant und kleiner als 30°.

## Patentansprüche

1. Clipmaschine zum Verschließen schlauchförmiger Verpackungen (9, 10) mittels Clips mit Raffeinrichtungen zum Zusammenraffen der Verpackung (9, 10) und wenigstens zwei Verschließarmen (1, 2, 3), die eingerichtet sind, aus verschiedenen Richtungen jeweils eine Schwenkbewegung hin zur zusammengerafften Verpackung (9, 10) auszuführen, und an einem der Verschließarme (1) eine Schneideinrichtung zum Durchtrennen der zusammengerafften Verpackung (9, 10) zwischen den Verschließstellen angeordnet ist, welche ein Schneidmesser (4) und einen Messerantrieb (5, 6, 7) umfasst, welcher so eingerichtet ist, dass das Schneidmesser (4) eine Schwenkbewegung durch die Schlauchachse zwischen den Verschließstellen ausführen kann, **dadurch gekennzeichnet, dass** an einem anderen Verschließarm (3) ein Gegenmesser (8) angeordnet ist, wobei beide Messer (4, 8) Schneidkanten (4a, 8a) aufweisen, die parallel zu einer die Schlauchachse zwischen den Verschließstellen kreuzenden, zwischen den Messern (4, 8) befindlichen Schneidebene verlaufen, die Messer (4, 8) an ihren einander zugewandten Seiten parallele Schneidflächen (4b, 8b) aufweisen, an die sich jenseits der Schneidkanten (4a, 8a) Keilflächen (4c, 8c) anschließen, wobei Schneidflächen (4b, 8b) und Keilflächen (4c, 8c) jeweils im spitzen Keilwinkel (4d, 8d) aufeinander treffen, und der Messerantrieb (5, 6, 7) derart eingerichtet ist, dass das Schneidmesser (4) parallel zur Schneidebene am Gegenmesser (8) so vorbeibewegt werden kann, dass sich der Schnittpunkt der Schneidkanten (4a, 8a) von einem Anfangsschneidpunkt vor der einen Seite der zusammengerafften Verpackung (9, 10) zu einem Endschneidpunkt jenseits der zusammengerafften Verpackung (9, 10) bewegt.

2. Clipmaschine nach Anspruch 1, **dadurch gekennzeichnet, dass** der Messerantrieb (5, 6, 7) einen Hebel (5) umfasst, bei dem das Schneidmesser (4) am Lastarm angeordnet ist und ein Motor (7) auf den Kraftarm einwirkt.

3. Clipmaschine nach einem der vorgenannten Ansprüche, **dadurch gekennzeichnet, dass** der Messerantrieb einen Linearmotor (7) umfasst.

4. Clipmaschine nach Anspruch 3, **dadurch gekennzeichnet, dass** der Linearmotor (7) ein Pneumatikzylinder mit eintauchendem Kolben ist.

5. Clipmaschine nach einem der vorgenannten Ansprüche, **dadurch gekennzeichnet, dass** das Gegenmesser (8) starr mit dem Verschließarm (3) verbunden ist.

6. Clipmaschine nach einem der vorgenannten Ansprüche, **dadurch gekennzeichnet, dass** die Schneidebene senkrecht zur Schlauchachse liegt.

7. Clipmaschine nach einem der vorgenannten Ansprüche, **dadurch gekennzeichnet, dass** die Schneidkante (4a, 8a) zumindest eines der Messer (4, 8), bevorzugt die Schneidkanten (4a, 8a) beider Messer (4, 8), entlang einer Geraden verläuft bzw. verlaufen.

8. Clipmaschine nach einem der vorgenannten Ansprüche, **dadurch gekennzeichnet, dass** der Winkel zwischen den Tangenten der beiden Schneidkanten (4a, 8a) im Schnittpunkt während seines Verlaufs vom Anfangsschneidpunkt zum Endschneidpunkt 45°, vorzugweise 30°, weiter vorzugsweise 20° und noch weiter vorzugsweise 10° nicht übersteigt.

9. Clipmaschine nach einem der vorgenannten Ansprüche, **dadurch gekennzeichnet, dass** der Keilwinkel (4d, 8d) bei zumindest einem der Messer (4, 8), bevorzugt bei beiden Messern (4, 8), entlang der Schneidkante (4a, 8a) konstant ist.

10. Clipmaschine nach einem der vorgenannten Ansprüche, **dadurch gekennzeichnet, dass** der Keilwinkel (4d, 8d) zumindest eines der Messer (4, 8), bevorzugt beider Messer (4, 8) nicht größer als 70°, vorzugsweise nicht größer als 50°, weiter vorzugsweise nicht größer als 40° und noch weiter vorzugsweise nicht größer als 30° ist.

## Claims

1. Clipping machine for closing tubular packagings (9, 10) by means of clips, said clipping machine having gathering devices for gathering together the packaging (9, 10) and at least two closing arms (1, 2, 3) which are set up to carry out a pivoting movement toward the gathered-together packaging (9, 10) in each case from different directions, and a cutting device is arranged on one of the closing arms (1) for severing the gathered-together packaging (9, 10) between the closing points, said cutting device including a cutting blade (4) and a blade drive (5, 6, 7) which is set up such that the cutting blade (4) is able to carry out a pivoting movement through the tube axis between the closing points, **characterized in that** a counter blade (8) is arranged on another closing arm (3), wherein the two blades (4, 8) have cutting edges (4a, 8a) which extend parallel to a cutting plane which intersects the tube axis between the closing points and is situated between the blades (4, 8), on their sides facing one another the blades (4, 8) have parallel cutting faces (4b, 8b), to which wedge faces (4c, 8c) connect on the other side of the cutting edges (4a, 8a), wherein cutting faces (4b, 8b) and wedge faces (4c, 8c) contact one another in each case at an acute wedge angle (4d, 8d), and the blade drive (5, 6, 7) is set up in such a manner that the cutting blade (4) can be moved parallel to the cutting plane past the counter blade (8) such that the point of intersection of the cutting edges (4a, 8a) moves from an initial cutting point in front of the one side of the gathered-together packaging (9, 10) to an end cutting point on the other side of the gathered-together packaging (9, 10).

2. Clipping machine according to Claim 1, **characterized in that** the blade drive (5, 6, 7) includes a lever (5) where the cutting blade (4) is arranged on the load arm and a motor (7) acts on the power arm.

3. Clipping machine according to one of the preceding claims, **characterized in that** the blade drive includes a linear motor (7).

4. Clipping machine according to Claim 3, **characterized in that** the linear motor (7) is a pneumatic cylinder with a plunging piston.

5. Clipping machine according to one of the preceding claims, **characterized in that** the counter blade (8) is connected in a rigid manner to the closing arm (3).

6. Clipping machine according to one of the preceding claims, **characterized in that** the cutting plane is at right angles to the tube axis.

7. Clipping machine according to one of the preceding claims, **characterized in that** the cutting edge (4a, 8a) of at least one of the blades (4, 8), in a preferred manner the cutting edges (4a, 8a) of both blades (4, 8), extends or extend along a straight line.

8. Clipping machine according to one of the preceding claims, **characterized in that** the angle between the tangents of the two cutting edges (4a, 8a) at the point of intersection does not exceed 45°, preferably 30°, further preferably 20° and even further preferably 10° during its course from the initial cutting point to the end cutting point.

9. Clipping machine according to one of the preceding claims, **characterized in that** the wedge angle (4d, 8d) in the case of at least one of the blades (4, 8), in a preferred manner in the case of both blades (4, 8), is constant along the cutting edge (4a, 8a).

10. Clipping machine according to one of the preceding claims, **characterized in that** the wedge angle (4d, 8d) of at least one of the blades (4, 8), in a preferred manner in the case of both blades (4, 8), is not in excess of 70°, preferably not in excess of 50°, further preferably not in excess of 40° and even further preferably is not in excess of 30°.

## Revendications

1. Machine à clip pour la fermeture d'emballage (9, 10) sous la forme de gaines à l'aide de clips avec des dispositifs de plissage pour le plissage de l'emballage (9, 10) et au moins deux bras de fermeture (1, 2, 3) conçus pour effectuer, à partir de différentes directions, un mouvement pivotant vers un emballage plissé (9, 10) et, au niveau d'un des bras de fermeture (1), un dispositif de coupe pour la découpe de l'emballage plissé (9, 10) est disposé entre les points de fermeture, qui comprend une lame de coupe (4) et un entraînement de lame (5, 6, 7), conçu de façon à ce que la lame de coupe (4) peut effectuer un mouvement de pivotement à travers l'axe de gaine entre les points de fermeture, **caractérisé en ce que**, au niveau d'un autre bras de fermeture (3), une contre-lame (8) est disposée, les deux lames (4, 8) présentant des arêtes de coupe (4a, 8a) qui s'étendent parallèlement à un plan de coupe se trouvant entre les lames (4, 8), croisant l'axe de gaine entre les points de fermeture, les lames (4, 8) présentant, au niveau de leurs côtés orientés entre eux, des surfaces de coupe (4b, 8b)parallèles, au niveau desquelles se raccordent, au-delà des arêtes de coupe (4a, 8a), des surfaces coniques (4c, 8c), les surfaces de coupe (4b, 8b) et les surfaces coniques (4c, 8c) se rencontrant avec un angle aigu (4d, 8d) et l'entraînement de lame (5, 6, 7) étant conçu de façon à ce que la lame de coupe (4) puisse être déplacée parallèlement au plan de coupe le long de la contre-lame (8) de façon à ce que le point de coupe des arêtes de coupe (4a, 8a) se déplace d'un point de coupe initial d'un côté de l'emballage plissé (9, 10) vers un point de coupe final au-delà de l'emballage plissé (9, 10).

2. Machine à clips selon la revendication 1, **caractérisée en ce que** l'entraînement de lame (5, 6, 7) comprend un levier (5), dans lequel la lame de coupe (4) est disposée sur le bras de charge et un moteur (7) agit sur le bras de force.

3. Machine à clips selon l'une des revendications précédentes, **caractérisée en ce que** l'entraînement de lame comprend un moteur linéaire (7).

4. Machine à clips selon la revendication 3, **caractérisée en ce que** le moteur linéaire (7) est un vérin pneumatique avec un piston plongeant.

5. Machine à clips selon l'une des revendications précédentes, **caractérisée en ce que** la contre-lame (8) est reliée de manière rigide avec le bras de fermeture (3).

6. Machine à clips selon l'une des revendications précédentes, **caractérisée en ce que** le plan de coupe est perpendiculaire à l'axe de gaine.

7. Machine à clips selon l'une des revendications précédentes, **caractérisée en ce que** l'arête de coupe (4a, 8a) d'au moins une des lames (4, 8), de préférence les arêtes de coupe (4a, 8a) des deux lames (4, 8), s'étend ou s'étendent le long d'une droite.

8. Machine à clips selon l'une des revendications précédentes, **caractérisée en ce que** l'angle entre les tangentes des deux arêtes de coupe (4a, 8a) ne dépasse pas, au point de coupe, pendant son trajet du point de coupe initiale au point de coupe final, 45°, de préférence 30°, de préférence 20° et de préférence 10°.

9. Machine à clips selon l'une des revendications précédentes, **caractérisée en ce que** l'angle de cale (4d, 8d) au niveau d'au moins une des lames (4, 8), de préférence au niveau des deux lames (4, 8), est constant le long de l'arête de coupe (4a, 8a).

10. Machine à clips selon l'une des revendications précédentes, **caractérisée en ce que** l'angle de cale (4d, 8d) d'au moins une des lames (4, 8), de préférence des deux lames (4, 8) n'est pas supérieur à 70°, de préférence pas supérieur à 50°, de préférence pas supérieur à 40° et de préférence pas supérieur à 30°.
